# EUROPEAN PATENT SPECIFICATION

(11) **EP 3 849 858 B1**
(45) Date of publication and mention of the grant of the patent: **28.02.2024**
(21) Application number: 18933626.6
(22) Date of filing: 12.09.2018
(51) Int. Cl.: B60S 9/08

(54) **POWERED LANDING GEAR ASSEMBLY**
ANGETRIEBENE FAHRWERKSANORDNUNG
ENSEMBLE TRAIN D'ATTERRISSAGE MOTORISÉ

(43) Date of publication of application: 21.07.2021
(73) Proprietor: SAF-Holland, Inc., Muskegon, MI 49442 (US)
(72) Inventor: SUN, David, Muskegon, Michigan 49442 (US); WALLNER, Andrew L., Muskegon, Michigan 49442 (US); HICKS, William J., Muskegon, Michigan 49442 (US); LING, Tianyu, Muskegon, Michigan 49442 (US); SALOIS, Patrick, Muskegon, Michigan 49442 (US); COLLINS, Brian M., Muskegon, Michigan 49442 (US)
(74) Representative: Müller Schupfner & Partner Patent- und Rechtsanwaltspartnerschaft mbB
(86) International application number: PCT/US2018/050682
(87) International publication number: WO 2020/055399

(56) References cited:
- WO-A1-2017/004457
- WO-A1-2018/078569
- WO-A1-2018/078569
- US-A- 5 238 266
- US-A1- 2005 073 141
- US-A1- 2005 073 141
- US-A1- 2005 202 923
- US-A1- 2014 157 917
- US-A1- 2017 001 603
- US-B1- 6 224 103

## Description

### BACKGROUND

The embodiments as disclosed herein further relate to a vehicle landing gear assembly, and in particular to a landing gear assembly configured to support a heavy-duty trailer when uncoupled from an associated towing vehicle such as a semi-tractor, and which is powered via an electronic motor and/or via a manual input.

US-2005/0073141 A1 relates to a demountable drive mechanism for coupling to a drive shaft of an operating device, the drive mechanism being directly secured to the drive shaft to cause the drive shaft to rotate.

WO 2018/078569 A1 discloses a landing gear assembly similar to the landing gear assembly defined by the preamble of independent claim 1.

WO 2017/004457 A1, US-5,238,266 and US-6,224,103 relate to powered landing-gear drive systems for a trailer for selectively expanding and retracting the landing gear legs of the trailer.

US-2014/157917 A1 relates to a multi-speed landing gear for a trailer including a housing and a telescoping leg connected with the housing, and a gear assembly for extending and retracting the leg.

### SUMMARY

It is an object of the present invention to provide a landing gear assembly, which is efficient in use, capable of a long-operating life and may be utilized to support and lift an associated vehicle via a self-contained battery-powered drive assembly. This object is fulfilled by a landing gear assembly having the features disclosed in claim 1. Preferred embodiments of the invention are subject of the dependent claims. The invention includes a landing gear assembly that includes a leg assembly including a first portion and a second portion, wherein the first and second portions of the leg assembly telescopingly engage one another, a gear assembly operably coupled to the first and second leg portions and configured to telescopingly move the first and second leg portions with respect to one another, and a drive assembly operably coupled to the gear assembly. The drive assembly includes a planetary gear arrangement configured to drive the gear assembly at a first speed and at a second speed that is different than the first speed, and a motor configured to drive the planetary gear assembly.

The principal objects of the embodiments as disclosed herein are to provide a durable landing gear assembly which may be utilized to support and lift an associated vehicle such as a heavy-duty trailer via a self-contained, battery-powered drive assembly, and/or (not claimed) via a manually driven input arrangement, the present inventive landing gear assembly is efficient in use, capable of a long operating life, and is particularly well adapted for the proposed use.

These and other features, advantages, and objects of the present invention will be further understood and appreciated by those skilled in the art by reference to the following specification, claims, and appended drawings.

### BRIEF DESCRIPTION OF THE DRAWINGS

Fig. 1 is a side elevation view of a heavy-duty trailer assembly including a landing gear assembly;
Fig. 2 is a front perspective view of the landing gear assembly;
Fig. 3 is a cross-sectional, front elevation view of the landing gear assembly;
Fig. 4 is a perspective view of a gear assembly and a drive assembly;
Fig. 5 is a front elevation view of the gear assembly and the drive assembly;
Fig. 5A is an enlarged view of the area VA, Fig. 5;
Fig. 6 is a cut-away perspective view of a planetary gear drive; and
Fig. 7 is a side elevation view of the landing gear assembly.

### DETAILED DESCRIPTION OF THE PREFERRED EMBODIMENTS

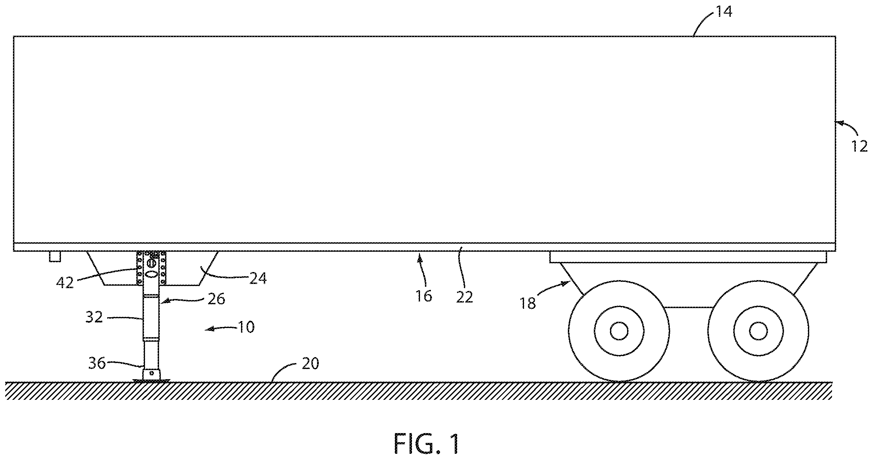

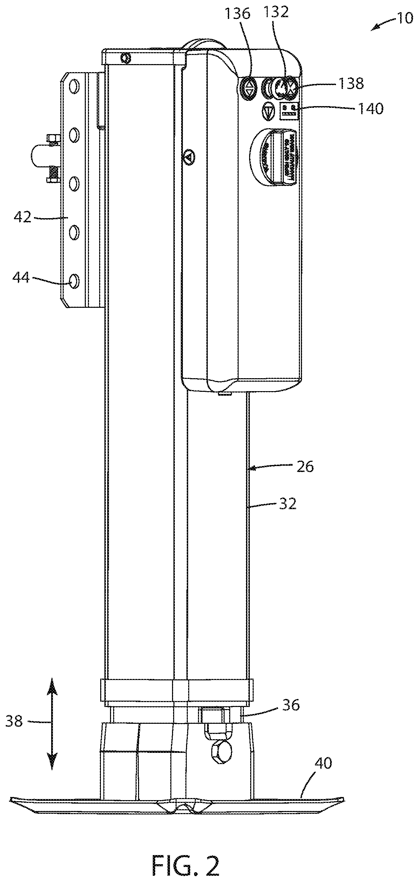

For purposes of description herein, the terms "upper," "lower," "right," "left," "rear," "front," "vertical," "horizontal," and derivatives thereof shall relate to the invention as oriented in Figs. 1 and 2. However, it is to be understood that the invention may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other characteristics relating to the embodiments disclosed herein are not to be considered as limiting, unless the claims expressly state otherwise.

The reference numeral 10 (Fig. 1) generally designates a landing gear assembly configured to support a heavy-duty vehicle such as a semi-trailer 12 when the trailer 12 is not supported by an associated towing vehicle such as a semi-truck (not shown). In the illustrated example, the semi-trailer 12 includes a cargo-housing container or body 14 supported by a vehicle frame assembly 16, a suspension arrangement 18, and a pair of the landing gear assemblies 10, wherein the landing gear assemblies 10 are spaced from one another on opposite sides of the trailer 12 and extend downwardly between the frame assembly 16 and a ground surface 20. The vehicle frame assembly 16 may include a plurality of longitudinally-extending frame members 22 and mounting plates 24 fixedly secured to the frame members 22 and extending downwardly therefrom. The landing gear assembly 10 is preferably configured to generate a lifting force of at least 200 kN (45,000 lbs) and more preferably of greater than 289 kN (65,000 lbs).

In the illustrated example, each landing gear assembly 10 (Figs. 1 and 2) includes a leg assembly 26, a gear assembly 28 located internally to the leg assembly 26, and a drive assembly 30 that may be located externally to the leg assembly 26. The leg assembly 26 includes an upper leg portion 32 defining an internal space 34 that houses the gear assembly 28, and a lower leg portion 36 that is telescopingly received within the upper leg portion 32 such that the lower leg portion 36 is telescopingly movable in the direction 38 relative to the upper leg portion 32. In the illustrated example, the lower leg portion 36 is pivotably coupled to a foot or supporting member 40 configured to abut the ground surface 20 when the landing gear assembly 10 is in an extended position. A hat-shaped mounting bracket 42 is fixedly secured to an upper portion of the upper leg portion 32. In the illustrated example, the mounting bracket 42 is welded to the upper leg portion 32, however other suitable connections may also be utilized. The mounting bracket 42 is secured to the mounting plate 24 via a plurality of mechanical fasteners such as bolts (not shown) that extend through mounting apertures 44.

The gear assembly 28 includes an input shaft 46 that receives an input from the drive assembly 30 as described below and that is coaxially aligned with an output shaft 48, where the output shaft 48 is coupled to an input shaft of the corresponding landing gear assembly located on an opposite side of the trailer 12. The gear assembly 28 also includes a first drive gear 48 in the form of a spur gear 50 fixed for rotation with the input shaft 46, a first receiving gear 52 in the form of a spur gear engaging the first drive gear 50 and fixed for rotation with a secondary shaft 54 that is offset from the input shaft 46 and the output shaft 48. A second drive gear 56 in the form of a spur gear is fixed for rotation with the secondary shaft 54 and engages a second receiving gear 58 in the form of a spur gear that is fixed for rotation with the output shaft 48. A third drive gear 60 in the form of a bevel gear is fixed for rotation with the second receiving gear 58 and engages a third receiving gear 62 in the form of a bevel gear that is fixed for rotation with a longitudinally-extending, threaded spindle 64. In the illustrated example, the second receiving gear 58 and the third drive gear 60 are formed as a single and integral member. The input shaft 46 is pivotably mounted within the interior space 34 of the upper leg portion 32 via a pair of bushing members 68, while the secondary shaft 54 is pivotally mounted within the interior space 34 of the upper leg portion 32 via a pair of bushing members 70.

The upper leg portion 32 includes a bearing wall 72 fixedly mounted within an interior thereof via welding. The bearing wall 72 is sandwiched between the third receiving gear 62 and a bearing assembly 74 such that the spindle 64 is rotatably secured within the leg assembly 26. A lifting nut 76 is threadably mounted on the spindle 64 between a pair of bearing walls 78 fixedly secured within an interior of the lower leg portion 36 via welding, such that rotation of the spindle 64 in the direction 80 causes the lifting nut 76 to travel along the length of the spindle 64 thereby causing telescoping movement of the lower leg portion 36 within the upper leg portion 32 of the leg assembly 26.

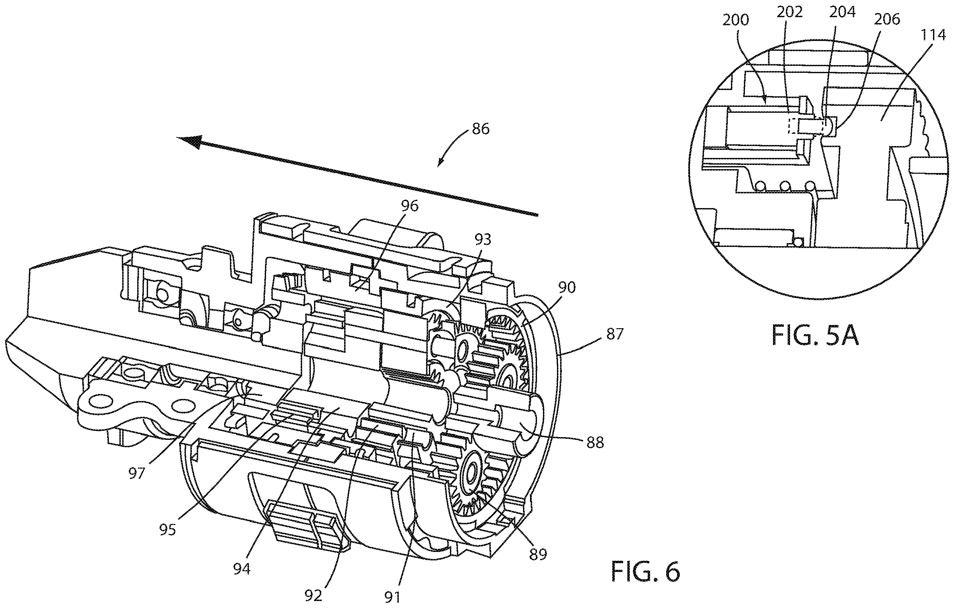

The drive assembly 30 includes an electric motor 82 powered by a lithium battery 84, which in the present example, includes a lithium battery. The drive assembly 30 further includes a planetary gear arrangement 86 driven by the motor 82. In the illustrated example, the gear arrangement 86 is operable between a first gearing ratio configuration where the gear arrangement 86 drives the gear assembly at a high first speed and low torque, and a second gearing ratio configuration where the gear arrangement 86 drives the gear assembly 28 at a low second speed and high torque. As best illustrated in Fig. 6, the planetary gear arrangement 86 includes a housing 87, a first sun gear 88 coupled with and driven by the motor 86, first stage planetary gears 89, a first ring gear 90, a second sun gear 91, second stage planetary gears 92, a second ring gear 93, a third sun gear 94, third stage planetary gears 95, a third ring gear 96, a fourth sun gear 97. In the low speed, high torque configuration, the motor 82 drives the first stage planetary gears 89 via the first sun gear 88, which in turn drives the second stage planetary gears 192 and the second sun gear 91, which in turn drives the third stage planetary gears 95 and the third sun gear 94, which in turn drives the fourth sun gear 97, which in turn drives the bevel drive gear 110, and wherein the first, second and third ring gears 90, 93, 96 are locked. In the high speed, low torque configuration, the second and third gears 93, 96 rotate with the second and third stage planetary gears 92, 95, while the first ring gear is fixed.

The drive assembly 30 may be coupled to the gear assembly 28 via an actuator arrangement 100. In the illustrated example, the actuator arrangement 100 includes an input gear 102 in the form of a spur gear and that is rotatably fixed to a driveshaft 104 that is rotatably supported within a housing 106 of the drive arrangement via a pair of bushing members 108. A drive gear 110 in the form of a bevel gear is driven by the planetary gear arrangement 86 and engages a receiving gear 112 in the form of a bevel gear and that is fixed for rotation with the driveshaft 104. The input gear 102 is configured to engage and disengage an output gear 114 in the form of a spur gear, where the output gear 114 is fixed for rotation with the input shaft 46 of the gear assembly 28.

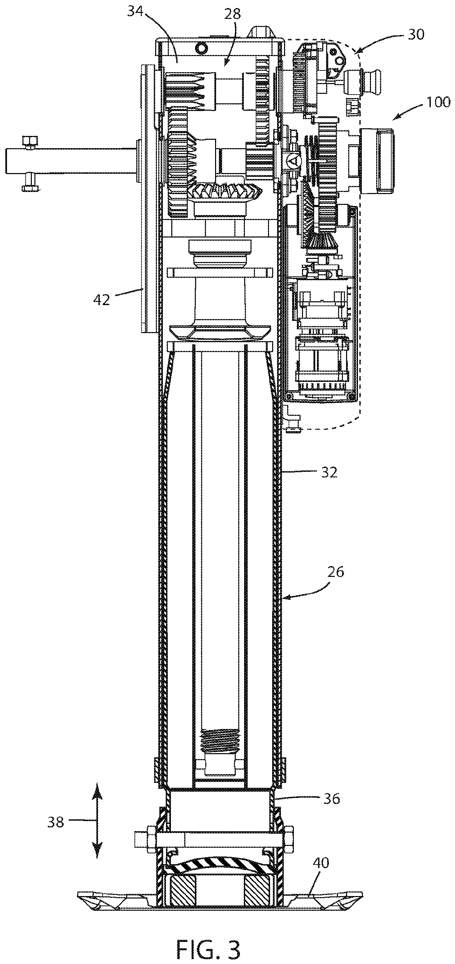

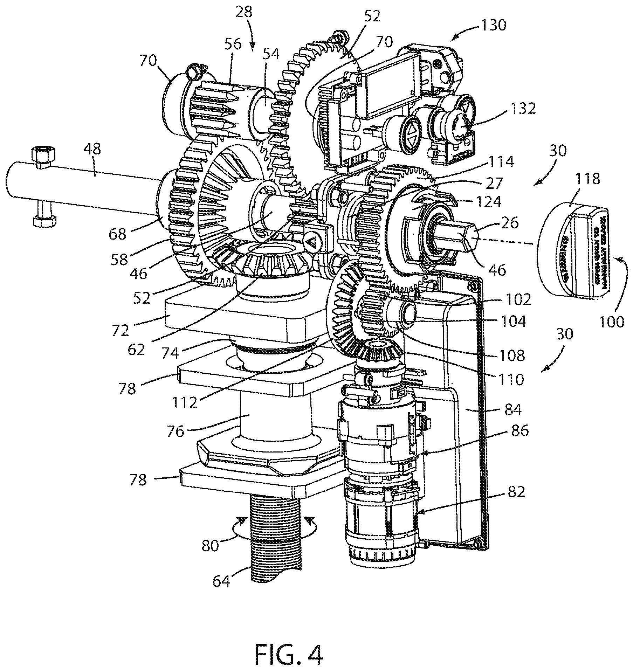

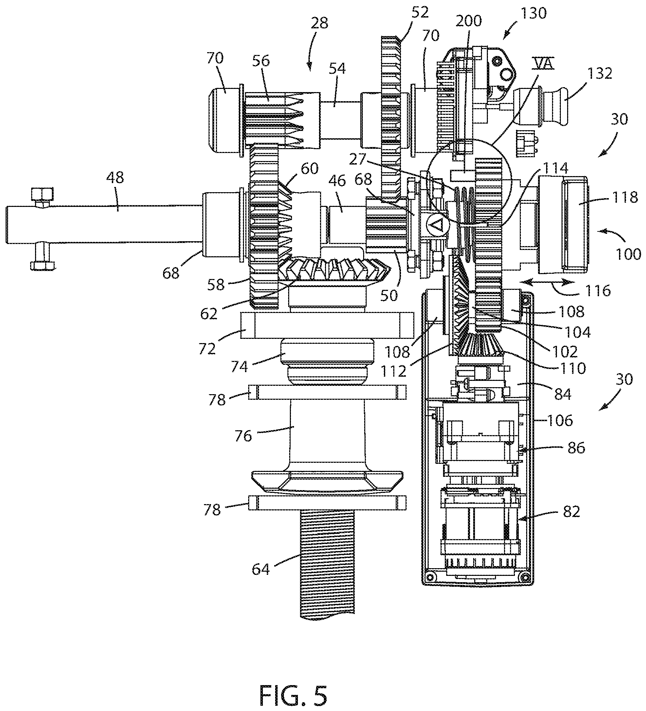

In one embodiment of the actuator arrangement 100, the output gear 114 may be configured to be slidably displaced along a length of the input shaft 46 in a direction 116 between an engaged position where the input gear 102 engages the output gear 114 and the drive assembly 30 is coupled to the gear assembly 28, and a disengaged position where the output gear 114 is moved laterally outward from the engaged position such that the output gear 114 is offset from the input gear 102 and does not engage the input gear 102 and the drive assembly 30 is uncoupled from the gear assembly 28. In the illustrated example, the actuator arrangement 100 includes an actuator member 118 in the form of a cover. In the present example, the cover 118 is movable between an engaged or coupled position as shown in Figs. 3 and 5, where the cover 118 prevents access to the input shaft 46, and a second or uncoupled/removed position as shown in Fig. 4, where a hexagonally-shaped end 26 of the input shaft 46 is accessible to an operator such that the operator can drive the landing gear assembly 10 via a manual handle (not shown) as well known in the art or a powered hand tool (not shown) that includes a motorized drive arrangement. In the present example, the cover 118 abuts a release ring 124, which in turn abuts the output gear 114 thereby forcing the output gear 114 laterally inward such that the output gear 114 engages the input gear 102. The actuator arrangement 100 further includes a spring member 26 that biases the output gear 114 from the engaged position to the disengaged position, such that when an operator removes the cover member 118, the spring member biases the output gear 114 from the engaged position toward the disengaged position where the output gear 114 is disengaged from the input gear 102, thereby automatically uncoupling the drive assembly 30 from the gear assembly 28.

In operation, the trailer 12 may be uncoupled or lifted from a supporting towing vehicle by extending each of the landing gear assemblies 10 by actuating the motor 82 via an input extension button 136. Electrical power from the battery 84 is then supplied to the motor 82 which drives the gear arrangement 86 which is in the first gearing ratio configuration. The gear arrangement 86 drives the gear assembly 28 via the actuator arrangement 100, thereby extending the lower gear portion 36 of the leg assembly 26 from the upper leg portion 32. It is noted that the current draw by the motor 82 is relatively low as the lower leg portion 36 extends from the upper leg portion 32 and before the foot or supporting member 40 contacts the ground surface 20. Once the foot 40 abuts the ground surface 20 the landing gear assemblies 10 begin to support the load or weight of the trailer 12, thereby increasing the power required from the motor 82 and necessarily increasing the current draw by the motor 82. The controller 130 is configured to switch the gear arrangement 86 from the first gearing ratio configuration to the second gearing ratio configuration once the current draw by the motor 82 is increased and maintained for a predetermined amount of time. In the present example, the controller 130 is configured to move the gear arrangement 86 from the first gearing ratio configuration to the second gearing ratio configuration after an increase in the average current draw is preferably between about 50 percent and about 10,000 percent, more preferably between about 100 percent and about 1,000 percent, and most preferably about 300 percent, is maintained preferably for approximately 10 seconds, and more preferably for about 5 seconds. The controller 130 may be configured to pause the lifting cycle momentarily while the gear arrangement 86 is reconfigured from the first gearing ratio configuration to the second gearing ratio configuration before continuing the lifting cycle in the second gearing ratio configuration. Extension of the landing gear assembly 10 is then continued until a predetermined condition is reached, such as a predetermined extension amount, a vehicle level condition, and the like. Extension of the landing gear assembly 10 may also be terminated by the operator releasing the associated input button. The controller 130 may also be configured to turn the motor 82 off if the change in current draw by the motor 82 is maintained for a predetermined amount of time. In the present example, the controller is configured to shut the motor 82 off if a significant change in current draw has been maintained for less than or equal to about one second, such as would occur during a malfunction where a component or subassembly of the landing gear assembly 10 is locked preventing extension/retraction, and/or if minimal or zero current draw is maintained for approximately 30 seconds or a predetermined time of less than 30 seconds, thereby decreasing the possibility of damage to various components of the landing gear assembly 10. Coupling of the trailer 12 to an associated supporting towing vehicle may be accomplished in the reverse manner as described above. Specifically, the operator may actuate the motor 82 via an input extension button 132 of the interface, where the motor 82 then drives the gear arrangement 86 in the second gearing ratio configuration, and the gearing arrangement 86 drives the gear assembly 28 and telescopingly retracts the lower leg portion 36 into the upper leg portion 32 thereby lowering the trailer 12 onto the supporting vehicle. The gear arrangement 86 remains in the second gearing ratio configuration until the load or weight of the trailer 12 begins to be reduced, as by supporting of the towing vehicle. Once the trailer 12 begins to be supported by the supporting, towing vehicle, the power required by the motor 82 decreases, thereby causing a decrease in current draw by the motor 82. Similar to as described above, the controller 130 is configured to monitor the current draw from the motor 82, such that when the decrease in current draw by the motor 82 is maintained for a predetermined amount of time, the controller 82 reconfigures the gear arrangement from the second gearing ratio configuration to the first gearing ratio configuration. In the present example, the controller 130 is configured to switch the gear arrangement 86 from the second gearing ratio configuration to the first gearing ratio configuration once a decrease in current draw is maintained preferably for about 10 seconds and more preferably for about 5 seconds. Again, as noted above, the controller 130 may be configured to pause driving of the gear arrangement 86 while the gear arrangement 86 is reconfigured from the second gearing ratio configuration to the first gearing ratio configuration. The gear arrangement 86 then continues operation in the first gearing ratio configuration and to retract the lower leg portion 36 into the upper leg portion 32 at the first speed. The lower leg portion 36 continues to be retracted into the upper leg portion 32 until a predetermined limit is reached, such as a height limit. The controller 130 may also be configured to shut the motor 82 off if the change in current draw is maintained for a predetermined amount of time. In the instant example, the controller 130 is configured to shut the motor 182 off if a significant change in current has been maintained for less than or equal to about one second, such as would occur during a malfunction where a component or subassembly of the landing gear assembly 10 is locked preventing retraction/extension, and/or may be configured to shut the motor 82 off if minimal or zero current draw is maintained for approximately 30 seconds or a predetermined time of less than 30 seconds, thereby reducing the possibility of damage to components of the landing gear assembly 10. An emergency shut off button 132 extends outwardly from the housing 106 and is configured to allow an operator to manually prevent operation of the motor 182 and consequently shut down the drive assembly 30 from extending and/or retracting leg assembly 26.

Creep of the landing gear assembly 10 from an extended position to a more retracted position while the landing gear assembly 10 is supporting a load may be prevented by locking arrangement 200 (Figs. 5 and 5A) that includes a solenoid or electric actuator 202 configured to actuate a lock pin 204 between a retracted or unlocked position (shown in dashed) where the output gear 114 is free to rotate, and an extended or locked position (shown in solid) where the lock pin 204 engages a relief 206 of the output gear 114 thereby preventing the output gear 114 from rotating and thus the landing gear assembly 10 from retracting.

It is noted that while the present embodiment includes an extension/retraction control arrangement that is coupled to the overall landing gear assembly, external controls may also be utilized, including remotely located controls, e.g. controls associated with a towing vehicle or located within a cab of a towing vehicle, and/or wireless control arrangements configured to communicate with the controller 130 via Bluetooth^{®}, and the like. Should the operator need to operate the landing gear assembly 10 via a manual input, for example, in instances where the battery 84 has an insufficient charge, or where the drive assembly 30 has malfunctioned, the operator may remove the cover 118. As noted above, removal of the cover 118 provides access to the hexagonally-shaped end 26 of the input shaft 46, thereby allowing the operator to attach a manual drive crank or handle or separate, external drive tool to the end 26 of the input shaft 46. As noted above, removal of the cover 118 further allows the biasing spring 26 to move the output gear 114 from an engaged position where the output gear 114 is aligned and engages the input gear 102, to the disengaged position where the output gear 114 is offset from the input gear 102 and the drive assembly 30 is disengaged or uncoupled from the gear assembly 28.

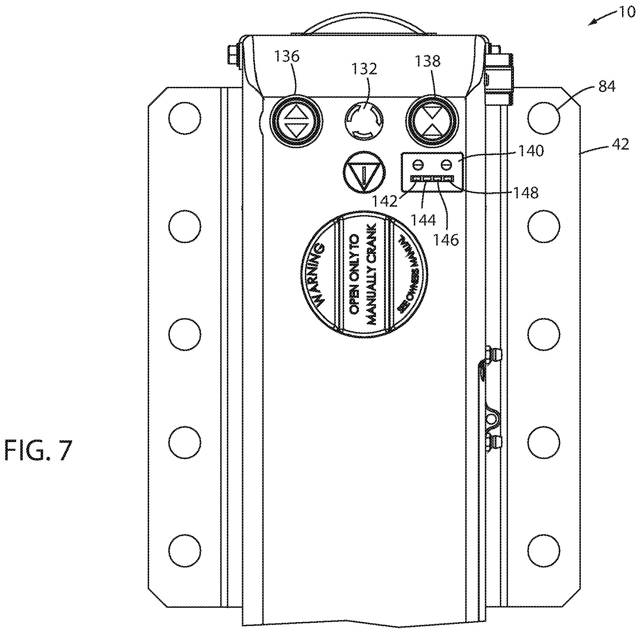

The landing gear assembly 10 (Figs. 1 and 7) may also include a visual leg extension indicator integral with the input extension button 136 , a visual leg retraction indicator integral with the input retraction button 138, and a battery status indicator 140. In the illustrated example, the leg extension indicator and the leg retraction indicator each include an LED, where the controller 130 is configured to light each of the indicators and convey to the operator the operation being conducted. In the illustrated example, the battery status indicator 40 includes a plurality of LED lights configured to visually convey to the operator the charging status of the battery 84. In the illustrated example, the battery status indicator 40 includes four LED lights, including a red LED 142, a yellow LED 144, a first green LED 146 and a second green LED 148, where the red LED 142 indicates a critically low battery charge, the yellow LED 144 indicates a depleted battery charge, the first green LED 146 indicates a moderate battery charge, and the second green LED 148 indicates a full or nearly full battery charge. The controller 130 may also be configured to utilize the LED lights 142, 144, 146, 148 to convey other information to the operator, such as a flashing pulse from the red LED 142 indicating a damaged battery.

It is noted that while the embodiments as disclosed herein include control arrangements requiring an operator to be in close proximity to the landing gear assembly or to the trailer or towing vehicle, other embodiments may include use of the landing gear assembly within remotely controlled and/or autonomous vehicles. In the foregoing description, it will be readily appreciated by those skilled in the art that modifications may be made to the invention without departing from the concepts disclosed herein. Such modifications are to be considered as included in the following claims, unless these claims by their language expressly state otherwise.

## Claims

1. A landing gear assembly (10), comprising:
a leg assembly (26) including a first portion (32) and a second portion (36), wherein the first and second portions (32, 36) of the leg assembly (26) telescopingly engage one another;
a gear assembly (28) operably coupled to the first and second portions (32, 36) and configured to telescopingly move the first and second portions (32, 36) with respect to one another; and
a drive assembly (30) fixed to the leg assembly (26) and coupled to the gear assembly (28), comprising
a planetary gear arrangement (86) operable between a first gearing ratio configuration of the planetary gear arrangement (86) configured to drive the gear assembly (28) at a first high speed and a low torque and a second gearing ratio configuration of the planetary gear arrangement (86) configured to drive the gear assembly (28) at a low second speed and a high torque;
**characterized in that** the drive assembly (30) further comprises:
an actuator arrangement (100) configured to couple the drive assembly (30) to and uncouple the planetary gear arrangement (86) from the gear assembly (28);
a motor (82) configured to drive the planetary gear arrangement (86), wherein the motor (82) drives the gear assembly (28) via the drive assembly (30) and the actuator arrangement (100); and
a battery (84) electrically coupled to the motor.

2. The landing gear assembly (10) of claim 1, wherein the motor (82) is an electric motor.

3. The landing gear assembly (10) of any one of the preceding claims, wherein the battery (84) includes a lithium battery.

4. The landing gear assembly (10) of any one of the preceding claims, wherein the battery (84) is located within a housing (106) and removable from within the housing (106) for replacement.

5. The landing gear assembly (10) of any one of the preceding claims, wherein the gear assembly (28) is located within an interior of at least one of the first portion and the second portion (32, 36) of the leg assembly (26).

6. The landing gear assembly (10) of any one of the preceding claims, wherein the first portion (32) of the leg assembly (26) is an upper portion, and the second portion (36) of the leg assembly (26) is a lower portion located below the upper portion.

7. The landing gear assembly (10) of claim 6, wherein the gear assembly (28) is located within an interior (34) of the upper portion.

8. The landing gear assembly (10) of any one of the preceding claims, wherein the second portion (36) is telescopingly received within the first portion (32).

9. The landing gear assembly (10) of any one of the preceding claims, wherein the gear assembly (28) is a single speed gear assembly.

10. The landing gear assembly (10) of any one of the preceding claims, further comprising:
a controller (130) configured to move the planetary gear arrangement (86) between a first configuration where the planetary gear arrangement (86) drives the gear assembly (28) at the first speed, and a second configuration where the planetary gear arrangement drives the gear assembly (28) at the second speed based on a predetermined parameter.

11. The landing gear assembly (10) of claim 10, wherein the predetermined parameter includes electric current draw by the motor (82).

12. The landing gear assembly (10) of any one of the preceding claims, wherein the gear assembly (28) includes a first driving gear (48) coupled for rotation with an input shaft (46), a first receiving gear (52) engaging the first drive gear (48) and coupled for rotation with a secondary shaft (54) offset from the input shaft (46), a second drive gear (56) coupled for rotation with the secondary shaft (54), a second receiving gear (58) engaging the second drive gear (56), a third drive gear (60) coupled for rotation with the second receiving gear (58) and engaging a third receiving gear (62), wherein the input shaft (46) is operably coupled with the planetary gear arrangement (86), and wherein the third receiving gear (62) is fixed for rotation with a spindle (64) operably coupled to the second portion (36) of the leg assembly (26).

13. The landing gear assembly (10) of any one of claims 10 or 11, wherein the controller (130) is configured to move the gear assembly (28) between the first and second configurations when a change in current draw is maintained for greater than or equal to about 5 seconds.

14. The landing gear assembly (10) of any one of claims 10, 11 or 13, wherein the controller (130) is configured to shut the motor (82) off if a change in current draw is maintained for greater than or equal to about 30 seconds.

## Patentansprüche

1. Eine Fahrwerksbaugruppe (10), umfassend:
eine Beinbaugruppe (26) mit einem ersten Abschnitt (32) und einem zweiten Abschnitt (36), wobei der erste und der zweite Abschnitt (32, 36) der Beinbaugruppe (26) teleskopartig ineinandergreifen;
eine Getriebebaugruppe (28), die funktionsfähig mit dem ersten und dem zweiten Abschnitt (32, 36) gekoppelt und so konfiguriert ist, dass sie den ersten und den zweiten Abschnitt (32, 36) teleskopartig in Bezug aufeinander bewegt; und
eine Antriebsbaugruppe (30), die an der Beinbaugruppe (26) befestigt und mit der Getriebebaugruppe (28) gekoppelt ist, umfassend
eine Planetengetriebeanordnung (86), die zwischen einer ersten Übersetzungskonfiguration der Planetengetriebeanordnung (86), die so konfiguriert ist, dass sie die Getriebebaugruppe (28) mit einer hohen ersten Drehzahl und einem niedrigen Drehmoment antreibt, und einer zweiten Übersetzungskonfiguration der Planetengetriebeanordnung (86), die so konfiguriert ist, dass sie die Getriebebaugruppe (28) mit einer niedrigen zweiten Drehzahl und einem hohen Drehmoment antreibt, betreibbar ist;
**dadurch gekennzeichnet, dass** die Antriebsbaugruppe (30) ferner umfasst:
eine Aktuatoranordnung (100), die so konfiguriert ist, dass sie die Antriebsbaugruppe (30) mit der Getriebebaugruppe (28) koppelt und die Planetengetriebeanordnung (86) von ihr entkoppelt;
einen Motor (82), der so konfiguriert ist, dass er die Planetengetriebeanordnung (86) antreibt, wobei der Motor (82) die Getriebebaugruppe (28) über die Antriebsbaugruppe (30) und die Aktuatoranordnung (100) antreibt; und
eine Batterie (84), die elektrisch mit dem Motor verbunden ist.

2. Die Fahrwerksbaugruppe (10) nach Anspruch 1, wobei der Motor (82) ein Elektromotor ist.

3. Die Fahrwerksbaugruppe (10) nach einem der vorhergehenden Ansprüche, wobei die Batterie (84) eine Lithiumbatterie enthält.

4. Die Fahrwerksbaugruppe (10) nach einem der vorhergehenden Ansprüche, wobei sich die Batterie (84) in einem Gehäuse (106) befindet und zum Austausch aus dem Gehäuse (106) herausgenommen werden kann.

5. Die Fahrwerksbaugruppe (10) nach einem der vorhergehenden Ansprüche, wobei die Getriebebaugruppe (28) im Inneren des ersten und/oder des zweiten Abschnitts (32, 36) der Beinbaugruppe (26) angeordnet ist.

6. Die Fahrwerksbaugruppe (10) nach einem der vorhergehenden Ansprüche, wobei der erste Abschnitt (32) der Beinbaugruppe (26) ein oberer Abschnitt ist und der zweite Abschnitt (36) der Beinbaugruppe (26) ein unterer Abschnitt ist, der unterhalb des oberen Abschnitts liegt.

7. Die Fahrwerksbaugruppe (10) nach Anspruch 6, wobei sich die Getriebebaugruppe (28) in einem Innenraum (34) des oberen Abschnitts befindet.

8. Die Fahrwerksbaugruppe (10) nach einem der vorhergehenden Ansprüche, wobei der zweite Abschnitt (36) teleskopartig in dem ersten Abschnitt (32) aufgenommen ist.

9. Die Fahrwerksbaugruppe (10) nach einem der vorhergehenden Ansprüche, wobei die Getriebebaugruppe (28) eine Ein-Gang-Getriebebaugruppe ist.

10. Die Fahrwerksbaugruppe (10) nach einem der vorhergehenden Ansprüche, die ferner Folgendes umfasst:
eine Steuerung (130), die so konfiguriert ist, dass sie die Planetengetriebeanordnung (86) zwischen einer ersten Konfiguration, in der die Planetengetriebeanordnung (86) die Getriebebaugruppe (28) mit der ersten Geschwindigkeit antreibt, und einer zweiten Konfiguration, in der die Planetengetriebeanordnung die Getriebebaugruppe (28) mit der zweiten Geschwindigkeit antreibt, auf der Grundlage eines vorbestimmten Parameters bewegt.

11. Die Fahrwerksbaugruppe (10) nach Anspruch 10, wobei der vorbestimmte Parameter die elektrische Stromaufnahme des Motors (82) umfasst.

12. Die Fahrwerksbaugruppe (10) nach einem der vorhergehenden Ansprüche, wobei die Getriebebaugruppe (28) ein erstes Antriebszahnrad (48), das zur Drehung mit einer Eingangswelle (46) gekoppelt ist, ein erstes Aufnahmezahnrad (52), das mit dem ersten Antriebszahnrad (48) in Eingriff steht und zur Drehung mit einer von der Eingangswelle (46) versetzten Sekundärwelle (54) gekoppelt ist, ein zweites Antriebszahnrad (56), das zur Drehung mit der Sekundärwelle (54) gekoppelt ist ein zweites Aufnahmezahnrad (58), das in das zweite Antriebszahnrad (56) eingreift, ein drittes Antriebszahnrad (60), das zur Drehung mit dem zweiten Aufnahmezahnrad (58) gekoppelt ist und in ein drittes Aufnahmezahnrad (62) eingreift, wobei die Eingangswelle (46) funktionsfähig mit der Planetengetriebeanordnung (86) gekoppelt ist, und wobei das dritte Aufnahmezahnrad (62) zur Drehung mit einer Spindel (64) befestigt ist, die funktionsfähig mit dem zweiten Abschnitt (36) der Beinbaugruppe (26) gekoppelt ist.

13. Die Fahrwerksbaugruppe (10) nach einem der Ansprüche 10 oder 11, wobei die Steuerung (130) so konfiguriert ist, dass sie die Getriebebaugruppe (28) zwischen der ersten und der zweiten Konfiguration bewegt, wenn eine Änderung der Stromaufnahme für länger als oder gleich etwa 5 Sekunden anhält.

14. Die Fahrwerksbaugruppe (10) nach einem der Ansprüche 10, 11 oder 13, wobei die Steuerung (130) so konfiguriert ist, dass sie den Motor (82) abschaltet, wenn eine Änderung der Stromaufnahme länger als oder gleich etwa 30 Sekunden anhält.

## Revendications

1. Assemblage formant béquille (10), comprenant :
un assemblage de jambe (26) incluant une première portion (32) et une seconde portion (36),
dans lequel la première et la seconde portion (32, 36) de l'assemblage de jambe (26) s'engagent de manière télescopique l'une avec l'autre ;
un assemblage d'engrenage (28) couplé de manière fonctionnelle à la première et à la seconde portion (32, 36) et configuré pour déplacer de manière télescopique la première et la seconde portion (32, 36) l'une par rapport à l'autre ; et
un assemblage d'entraînement (30) fixé à l'assemblage de jambe (26) et couplé à l'assemblage d'engrenage (28), comprenant
un agencement d'engrenage planétaire (86) pouvant fonctionner entre une première configuration de rapport d'engrenage de l'agencement d'engrenage planétaire (86) configurée pour entraîner l'assemblage d'engrenage (28) à une première vitesse élevée et à un couple faible, et une seconde configuration de rapport d'engrenage de l'agencement d'engrenage planétaire (86) configurée pour entraîner l'assemblage d'engrenage (28) à une seconde vitesse basse et à un couple élevé ;
**caractérisé en ce que** l'assemblage d'engrenage (30) comprend en outre :
un agencement d'actionneur (100) configuré pour coupler l'assemblage d'entraînement (30) et pour découpler l'agencement d'engrenage planétaire (86) de l'assemblage d'engrenage (28) ;
un moteur (82) configuré pour entraîner l'agencement d'engrenage planétaire (86),
dans lequel le moteur (82) entraîne l'agencement d'engrenage (28) via l'assemblage d'entraînement (30) et l'agencement d'actionneur (100) ; et une batterie (84) couplée électriquement au moteur.

2. Assemblage formant béquille (10) selon la revendication 1, dans lequel le moteur (82) est un moteur électrique.

3. Assemblage formant béquille (10) selon l'une quelconque des revendications précédentes, dans lequel la batterie (84) inclut une batterie au lithium.

4. Assemblage formant béquille (10) selon l'une quelconque des revendications précédentes, dans lequel la batterie (84) est située à l'intérieur d'un boîtier (106) et peut être retirée de l'intérieur du boîtier (106) à des fins de remplacement.

5. Assemblage formant béquille (10) selon l'une quelconque des revendications précédentes, dans lequel l'assemblage d'engrenage (28) est situé à l'intérieur d'une partie inférieure de l'une au moins de la première portion et de la seconde portion (32, 36) de l'assemblage de jambe (26).

6. Assemblage formant béquille (10) selon l'une quelconque des revendications précédentes, dans lequel la première portion (32) de l'assemblage de jambe (26) est une portion supérieure, et la seconde portion (36) de l'assemblage de jambe (26) est une portion inférieure située en dessous de la portion supérieure.

7. Assemblage formant béquille (10) selon la revendication 6, dans lequel l'assemblage d'engrenage (28) est situé à l'intérieur d'une partie intérieure (34) de la portion supérieure.

8. Assemblage formant béquille (10) selon l'une quelconque des revendications précédentes, dans lequel la seconde portion (36) est reçue de manière télescopique à l'intérieur de la première portion (32).

9. Assemblage formant béquille (10) selon l'une quelconque des revendications précédentes, dans lequel l'assemblage d'engrenage (28) et un assemblage d'engrenage à vitesse unique.

10. Assemblage formant béquille (10) selon l'une quelconque des revendications précédentes, comprenant en outre :
un contrôleur (130) configuré pour déplacer l'agencement d'engrenage planétaire (86) entre une première configuration dans laquelle l'agencement d'engrenage planétaire (86) entraîne l'assemblage d'engrenage (28) à la première vitesse, et une seconde configuration dans laquelle l'agencement d'engrenage planétaire entraîne l'assemblage d'engrenage (28) à la seconde vitesse sur la base d'un paramètre prédéterminé.

11. Assemblage formant béquille (10) selon la revendication 10, dans lequel le paramètre prédéterminé inclut un courant électrique soutiré par le moteur (82).

12. Assemblage formant béquille (10) selon l'une quelconque des revendications précédentes, dans lequel l'assemblage d'engrenage (28) inclut un premier engrenage d'entraînement (48) couplé pour une rotation avec un arbre d'entrée (46), un premier engrenage de réception (52) engageant le premier engrenage d'entraînement (48) et couplé pour une rotation avec un arbre secondaire (54) décalé par rapport à l'arbre d'entrée (46), un deuxième engrenage d'entraînement (56) couplé pour une rotation avec l'arbre secondaire (54), un deuxième engrenage de réception (58) engageant le deuxième engrenage d'entraînement (56), un troisième engrenage d'entraînement (60) couplé pour une rotation avec le deuxième engrenage de réception (58) et engageant un troisième engrenage de réception (62), l'arbre d'entrée (46) étant couplé de manière fonctionnelle à l'agencement d'engrenage planétaire (86), et le troisième engrenage de réception (62) étant fixé pour une rotation avec une broche (64) couplée de manière opérationnelle à la seconde portion (36) de l'assemblage de jambe (26).

13. Assemblage formant béquille (10) selon l'une quelconque des revendications 10 ou 11, dans lequel le contrôleur (130) est configuré pour déplacer l'assemblage d'engrenage (28) entre la première configuration et la seconde configuration quand un changement dans un courant soutiré est maintenu pendant une durée supérieure ou égale à 5 secondes environ.

14. Assemblage formant béquille (10) selon l'une quelconque des revendications 10,11 ou 13, dans lequel le contrôleur (130) est configuré pour couper le moteur (82) si un changement dans un courant soutiré est maintenu pendant une durée supérieure ou égale à 30 secondes environ.
